# EUROPEAN PATENT APPLICATION

(11) **EP 1 679 882 A1**
(43) Date of publication of application: **12.07.2006**
(21) Application number: 05776888.9
(22) Date of filing: 01.09.2005
(51) Int. Cl.: H04N 5/21, H04N 5/262

(54) **VIDEO SIGNAL PROCESSOR**

(30) Priority: 14.10.2004 JP 2004300515
(71) Applicant: MATSUSHITA ELECTRIC INDUSTRIAL CO., LTD., Osaka 571-8501 (JP)
(72) Inventor: YAMANA, Akifumi, Hyogo 673-0846 (JP); HOASHI, Katsumi, Osaka 572-0004 (JP)
(74) Representative: Grünecker, Kinkeldey, Stockmair & Schwanhäusser Anwaltssozietät
(86) International application number: PCT/JP2005/015984
(87) International publication number: WO 2006/040883

(57) **Abstract**

In the case of performing NR (noise reduction) and scaling on video signals, the NR buffer **104** is formed by, for example, five line memories. An NR section **103** and a scaling section **105** are controlled by a control section **108.** The control section **108** controls the NR section **103** and the scaling section **105** such that video signals subjected to noise reduction by the NR section **103** and corresponding to one line are output from the NR section **103** to an arbitrary one of the line memories of the NR buffer **104** and video signals corresponding to a plurality of lines and stored in the line memories of the NR buffer **104** except for the line memory to which the video signals corresponding to one line have been input from the NR section **103** are input from the NR buffer **104** to the scaling section **105.** Accordingly, noise components of video signals are reduced with the memory size reduced.

## Description

### TECHNICAL FIELD

The present invention relates to video signal processors for reducing noise components of video signals and performs magnification or reduction on video signals.

### BACKGROUND ART

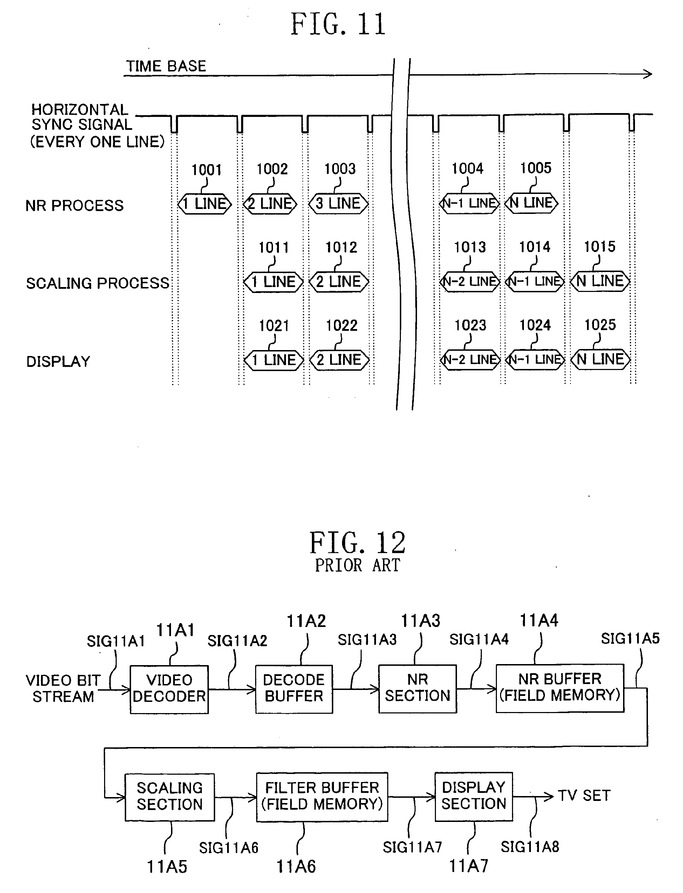

Video signal processors including NR (noise reduction) circuits for reducing noise included in video signals are known to date (see, for example, Patent Document 1). Hereinafter, a block diagram of a video signal processor including such an NR circuit will be described as an example with reference to FIG. **12.**

As illustrated in FIG. **12,** in a conventional video signal processor, a video bit stream which is coded video data is input to a video decoder **11A1.** These coded video signals are temporarily saved in a decode buffer **11A2.** Thereafter, an NR section (noise reduction section) **11A3** acquires video signals from the decode buffer **11A2,** reduces noise components of the acquired video signals and temporarily saves the signals in an NR buffer **11A4.**

The NR buffer **11A4** is formed by a field memory, and video signals corresponding to one screen (one field) are temporarily saved therein. After video signals corresponding to one screen have been stored in the NR buffer **11A4**, a scaling section **11A5** acquires video signals corresponding to necessary lines from the NR buffer **11A4** and performs magnification or reduction, which will be hereinafter referred to as scaling, on the video signals in the vertical and horizontal directions based on the acquired video signals, and the resultant signals are temporarily saved in a filter buffer **11A6.** A display section **11A7** acquires video signals corresponding to one screen from the filter buffer **11A6** to allow an image to be displayed on the screen of a TV set or other equipment in synchronization with, for example, a TV signal.

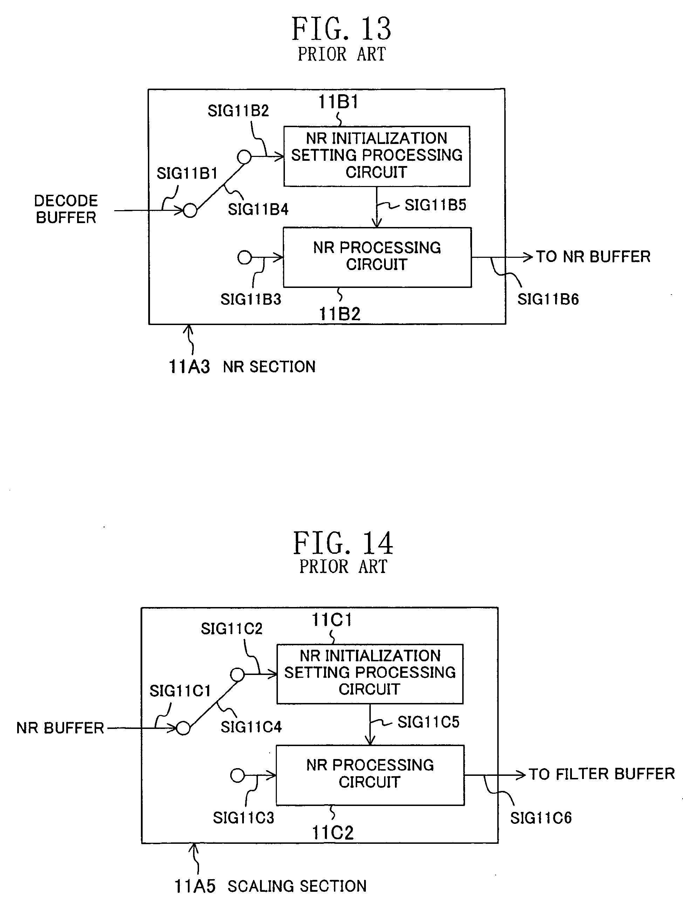

FIG. **13** is a block diagram illustrating an inner configuration of the NR section **11A3.** As illustrated in FIG. **13,** in the NR section **11A3** of the conventional video signal processor, an NR initialization setting processing circuit **11B1** specifies a noise reduction parameter for reducing a noise component, and an NR processing circuit **11B2** reduces a noise component based on the specified noise reduction parameter.

FIG. **14** is a block diagram illustrating an inner configuration of the scaling section **11A5.** As illustrated in FIG. **14,** in the scaling section **11A5** of the conventional video signal processor, a scaling initialization setting processing circuit **11C1** specifies scaling factors in the vertical and horizontal directions and a filter coefficient parameter, and then, based on the specified scaling factor in the vertical and horizontal directions and the specified filter coefficient parameter, a scaling processing circuit **11C2** performs scaling on video signals in the vertical and horizontal directions.

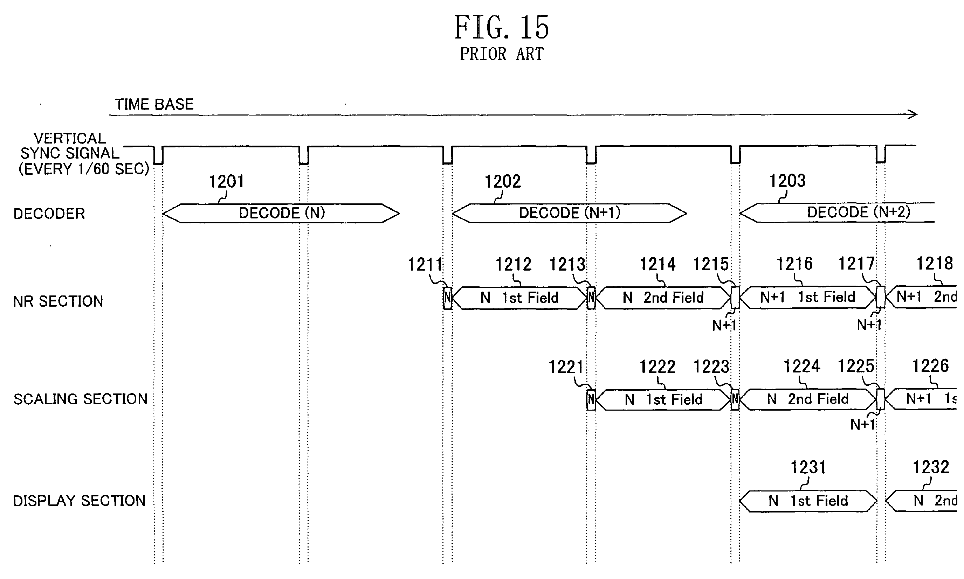

FIG. **15** shows operation timings of the conventional video signal processor. As illustrated in FIG. **15,** in the conventional video signal processor, the NR section **11A3** for reducing noise components performs noise reduction on video signals corresponding to one screen in a period for N 1st Field 1212 in synchronization with a vertical sync signal. Then, in synchronization with the next vertical sync signal, in a period for N 1 st Field 1222, which is a period associated with this vertical sync signal for noise reduction by the NR section **11A3,** the scaling section **11A5** sequentially acquires video signals subjected to the noise reduction and corresponding to necessary lines out of the video signals corresponding to one screen, and performs scaling on the video signals in the vertical and horizontal directions, and then the resultant signals are saved in the filter buffer **11A6.** Subsequently, in synchronization with the next vertical sync signal, in N 1st Field 1231, which is a period associated with this vertical sync signal for the scaling, the display section **11A7** outputs video signals saved in the filter buffer **11A6** in synchronization with a TV signal.
Patent Document 1: Japanese Unexamined Patent Publication No. 2001-186377

### DISCLOSURE OF INVENTION

### Problems that the Invention is to solve

In the conventional technique, however, the NR buffer **11A4** is formed by a field memory for storing video signals corresponding to one screen (i.e., one field = 540 lines, for example), and thus the following drawback arises.

Specifically, the NR section **11A3** is generally controlled to execute or suspend noise reduction depending on the amount of noise included in video signals. To implement such control, as illustrated in FIG. **12,** for example, adopted is a configuration in which a selector (not shown) is provided at a previous stage of the NR section **11A3** so that the output of the decode buffer **11A2** is given to the NR section **11A3** when noise reduction is necessary whereas the output of the decode buffer **11A2** is directly given to the scaling section **11A5** when noise reduction is unnecessary.

However, with this configuration, in a situation where the NR section **11A3** is suspended, video signals are input to the scaling section **11A5** without passing through the NR section **11A3.** Accordingly, the scaling by the scaling section **11A5** is performed earlier than that in a situation where the NR section **11A3** operates by a period associated with video signals corresponding to one screen (i.e., one field), that is, by a period associated with one vertical pixel signal (e.g., 1/60 second). As a result, video signals are displayed on a video display screen such as a TV screen earlier by a period associated with one vertical pixel signal, so that normal display is not provided.

As a first solution to eliminate the foregoing drawback, for example, it is conceivable to add hardware in which video signals from the decode buffer **11A2** are temporarily copied so that the copied video signals are input to the scaling section **11A5** in a situation where the NR section **11A3** is suspended. As a second solution, it is conceivable to add hardware for use in providing a display of video signals on a video display screen with a delay corresponding to a period associated with one screen to make the video display normal in a situation where the NR section **11A3** is suspended. However, these solutions have the drawback of necessity of additional hardware.

In addition, the NR buffer **11A3** is a field memory and has large capacity, so that a delay time corresponding to one screen is present before an actual display of an image.

It is therefore an object of the present invention to provide a video signal processor in which the capacity of an NR buffer is limited to a small value and video signals are always displayed normally without the necessity of additional hardware in both situations of operation and suspension of an NR section.

### Means of Solving the Problems

To achieve the foregoing object, according to the present invention, an NR buffer is formed by a plurality of line memories, and noise reduction by an NR section and scaling by a scaling section are performed in parallel in such a manner that video signals subjected to noise reduction by the NR section and corresponding to one line are saved in one of the line memories and video signals saved in other line memories and corresponding to a plurality of lines are used for the processing by the scaling section.

Specifically, a video signal processor according to the present invention includes: a noise reduction section for reducing noise components of video signals; an NR buffer for storing video signals whose noise components have been reduced by the noise reduction section, the NR buffer being formed by a plurality of line memories; a magnification/reduction section for performing magnification or reduction on video signals from the NR buffer in vertical and horizontal directions; and a control section for controlling the noise reduction section and the magnification/reduction section, wherein the control section controls the noise reduction section and the magnification/reduction section such that video signals corresponding to one line out of the video signals subjected to the noise reduction are output from the noise reduction section to one of the line memories of the NR buffer and the other video signals corresponding to a plurality of lines and stored in the line memories of the NR buffer except for the line memory to which the video signals corresponding to one line have been input from the noise reduction section are input from the NR buffer to the magnification/reduction section

In the video signal processor of the present invention, the control section includes: NR line buffer address holding units in each of which an address of an associated one of the line memories of the NR buffer is saved; an input switch for selecting one of the addresses of the line memories saved in the NR line buffer address holding units and indicating the selected address to the noise reduction section; an output switch for selecting one of the addresses of the line memories saved in the NR line buffer address holding units and indicating the selected address to the magnification/reduction section; and a buffer management controlling unit for controlling the input switch such that the address of one of the line memories to which video signals corresponding to one line have been input from the noise reduction section is selected from the NR line buffer address holding units in the NR buffer and for controlling the output switch such that the addresses of the line memories except for the line memory whose address has been selected by the input switch are selected from the NR line buffer address holding units.

In the video signal processor of the present invention, the number of the NR line buffer address holding units is equal to the number of the line memories included in the NR buffer, each of the NR line buffer address holding units holds an address value of an associated one of the line memories of the NR buffer, and the buffer management controlling unit controls the input switch so that the input switch sequentially selects the NR line buffer address holding units in such a manner that video signals output from the noise reduction section and corresponding to one line are cyclically held in the line memories of the NR buffer line by line.

In the video signal processor of the present invention, the noise reduction section reduces noise components of video signals corresponding to one line in synchronization with a horizontal sync signal, and in synchronization with the horizontal sync signal, the magnification/reduction section performs magnification or reduction on the video signals corresponding to one line in vertical and horizontal directions with a horizontal sync signal following the horizontal sync signal used for the reduction of the noise components of the video signals corresponding to one line by the noise reduction section.

The video signal processor of the present invention further includes: an initialization setting section for indicating an initial value for reducing the noise components of the video signals to the noise reduction section and for indicating an initial value for performing magnification or reduction on the video signal in the vertical and horizontal directions to the magnification/reduction section.

In the video signal processor of the present invention, the initialization setting section includes: a noise-reduction initialization setting processing circuit for indicating a noise reduction parameter for reducing the noise component to the noise reduction section; and a magnification/reduction initialization setting processing circuit for indicating, to the magnification/reduction section, a filter parameter for magnification on video signals with a specified magnification factor.

In the video signal processor of the present invention, the magnification/reduction initialization setting processing circuit starts indication after indication by the noise-reduction initialization setting processing circuit has been completed, and, with a vertical sync signal one period before a start of noise reduction performed by the noise reduction section on video signals corresponding to a given line in synchronization with a vertical sync signal or 1/60 second before the start, the magnification/reduction initialization setting processing circuit also starts indication of an initial value for magnification or reduction on video signals using video signals corresponding to a plurality of lines including the given line.

In the video signal processor of the present invention, the noise-reduction initialization setting processing circuit starts indication after indication by the magnification/reduction initialization setting processing circuit has been completed, and with a vertical sync signal one period before a start of noise reduction performed by the noise reduction section on video signals corresponding to a given line in synchronization with a vertical sync signal or 1/60 second before the start, the noise-reduction initialization setting processing circuit starts indication of an initial value for reducing noise components of video signals corresponding to the given line.

The video signal processor of the present invention further includes a display section for outputting video signals subjected to magnification or reduction by the magnification/reduction section in synchronization with the video signals, the display section being provided at a stage subsequent to the magnification/reduction section.

In the video signal processor of the present invention, the display section outputs, to a video display device, video signals corresponding to one line with a given horizontal sync signal also used for magnification or reduction performed on the video signals corresponding to the line by the magnification/reduction section.

In the video signal processor of present invention, the noise reduction section suspends reduction of a noise component for 1/60 second or a period which is N or more times longer than 1/60 second (where N is an integer of two or more).

In the video signal processor of the present invention, the noise reduction section performs no reduction of noise components of video signals to be subjected to magnification or reduction by the magnification/reduction section and corresponding to the lines.

The video signal processor of the present invention further includes a decode buffer for holding video signals obtained by decoding a coded video bit stream or uncompressed digital video signals, and the noise reduction section reduces noise components of the video signals obtained by decoding the video bit stream or the uncompressed digital video signals held in the decode buffer.

As described above, in the video signal processor according to the present invention, video signals subjected to noise reduction by a noise reduction section and corresponding to one line are stored in a line memory in an NR buffer and video signals already stored in a plurality of line memories in the NR buffer and corresponding to a plurality of lines are input to a magnification/reduction section for magnification/reduction on the video signals. Accordingly, the noise reduction section and the magnification/reduction section operate in parallel with each other, and noise reduction and magnification/reduction by these sections are performed in the same cycle of a vertical sync signal for video signals. This makes the processing in the magnification/reduction section performed at the same timing as that in a case where the noise reduction section continues to operate, even when operation of the noise reduction section stops. As a result, it is possible to prevent an image from being displayed on a video display device such as a TV set at a timing earlier by a period corresponding to one vertical sync signal (i.e., one cycle, e.g., 1/60 second). Therefore, an image is normally displayed on the video display device without the necessity of additional hardware.

In addition, the NR buffer is formed by a plurality of line memories in which a line memory associated with one line is added to line memories associated with a plurality of lines necessary for magnification/reduction on video signals by the magnification/reduction section. Accordingly, unlike a conventional processor, it is unnecessary to form an NR buffer by a field memory, and thus size reduction is achieved.

In particular, according to the present invention, initialization setting processes for the noise reduction section and the magnification/reduction section are performed with a vertical sync signal one period before a vertical sync signal with which noise reduction and magnification/reduction on video signals are performed, so that operation frequencies of the noise reduction section and the magnification/reduction section are capable of being reduced, and the circuit configurations of the noise reduction section and the magnification/reduction section are allowed to be omitted in part.

Further, according to the present invention, when the magnification/reduction section performs magnification/reduction on video signal based on a horizontal sync signal, video signals subjected to magnification/reduction and corresponding to one line are output to a video display device such as a TV set in synchronization with the horizontal sync signal based on which the magnification/reduction on the video signals corresponding to one line is performed. Accordingly, unlike a conventional processor, a field memory for storing video signal subjected to magnification/reduction is unnecessary.

### EFFECTS OF THE INVENTION

As described above, in the video signal processor according to the present invention, an NR buffer is formed by a plurality of line memories. This ensures normal display on a video display device such as a TV set at any time, irrespective of suspension and continuation of operation of the noise reduction section. In addition, it is unnecessary to form the NR buffer by a field memory, so that size reduction of the NR buffer is achieved.

In particular, according to the present invention, initialization setting processes for the noise reduction section and the magnification/reduction section can be performed with margins, and operation frequencies of the noise reduction section and the magnification/reduction section are reduced. Accordingly, the circuit configurations of the noise reduction section and the magnification/reduction section are simplified.

In addition, according to the present invention, the magnification/reduction section performs magnification/reduction on video signals corresponding to one line based on a horizontal sync signal and the video signals subjected to the magnification/reduction and corresponding to one line are output to a video display device such as a TV set in the same cycle of a horizontal sync signal based on which the magnification/reduction is performed. Accordingly, unlike a conventional processor, a field memory for storing video signals subjected to magnification/reduction is unnecessary.

### BRIEF DESCRIPTION OF DRAWINGS

[FIG. **1**] FIG. **1** is a block diagram illustrating a video signal processor according to a first embodiment of the present invention.
[FIG. **2**] FIG. **2** is a view illustrating an inner configuration of an NR buffer included in the video signal processor.
[FIG. **3**] FIG. **3** is a block diagram illustrating an inner configuration of a control section included in the video signal processor.
[FIG. **4**] FIG. **4** is a timing chart showing an example of operation of a main portion of the video signal processor.
[FIG. **5**] FIG. **5** is a timing chart showing an example of operation of an NR section and a scaling section included in the video signal processor with respect to a horizontal sync signal.
[FIG. **6**] FIG. **6** is a block diagram illustrating a video signal processor according to a second embodiment of the present invention.
[FIG. **7**] FIG. **7** is a block diagram illustrating an inner configuration of an NR/scaling initialization setting section included in the video signal processor.
[FIG. **8**] FIG. **8** is a timing chart showing an example of operation of a main portion of the video signal processor.
[FIG. **9**] FIG. **9** is a block diagram illustrating a video signal processor according to a third embodiment of the present invention.
[FIG. **10**] FIG. **10** is a timing chart showing an example of operation of a main portion of the video signal processor.
[FIG. **11**] FIG. **11** is a timing chart showing an example of operation of an NR section, a scaling section and a display section included in the video signal processor with respect to a horizontal sync signal.
[FIG. **12**] FIG. **12** is a block diagram illustrating a conventional video signal processor.
[FIG. **13**] FIG. **13** is a view illustrating an inner configuration of an NR section included in the conventional video signal processor.
[FIG. **14**] FIG. **14** is a view illustrating an inner configuration of a scaling section included in the conventional video signal processor.
[FIG. **15**] FIG. **15** is a timing chart showing operation of the conventional video signal processor.

### Description of Numerals

- **101, 401, 801**: video decoder
- **102, 402, 802**: decode buffer
- **103, 404, 803**: NR section (noise reduction section)
- **104, 405, 804**: NR buffer
- **104a** through **104e**: line memories
- **105, 406, 805**: scaling section
- **106, 407**: filter buffer
- **107, 408, 806**: display section
- **108, 409, 807**: control section
- **403**: NR/scaling initialization setting section
- **201**: input switch
- **202** through 206: NR line buffer address holding unit
- **207**: output switch
- **208**: buffer management controlling unit
- **403**: NR/scaling initialization setting section (initialization setting section)
- **501**: noise-reduction initialization setting processing circuit
- **502**: scaling initialization setting processing circuits

### BEST MODE FOR CARRYING OUT THE INVENTION

Hereinafter, embodiments of the present invention will be described with reference to the drawings.

### (EMBODIMENT 1)

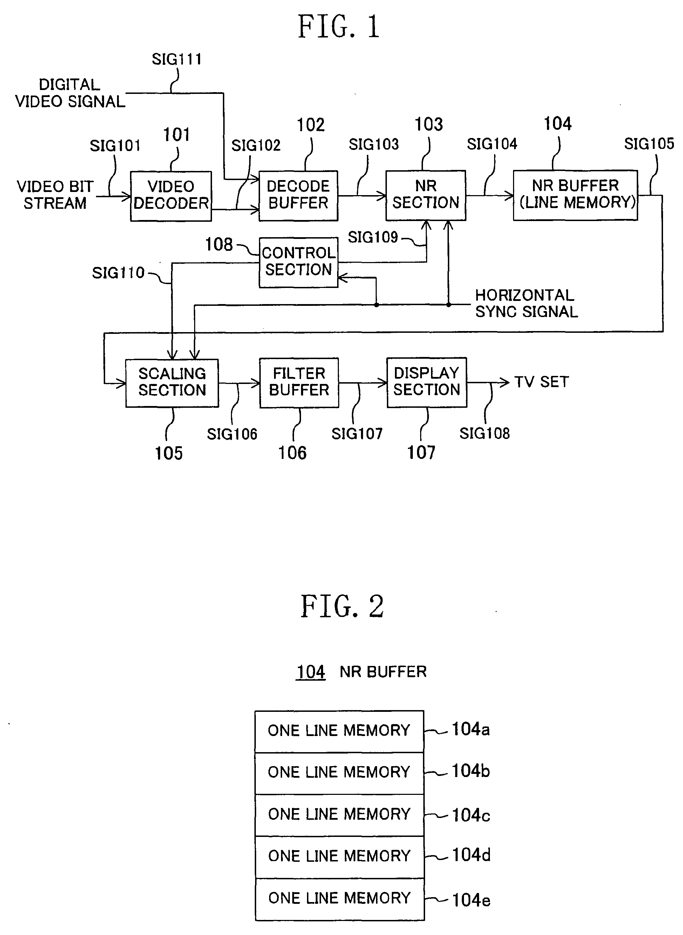

FIG. **1** is a block diagram illustrating a configuration of a video signal processor according to a first embodiment of the present invention.

The illustrated video signal processor of this embodiment is a system for decoding a video bit stream compressed in, for example, the MPEG format and reducing noise components of the decoded video signals and also for performing scaling on the video signals.

The video signal processor of this embodiment includes: a video decoder **101;** a decode buffer **102;** an NR section (noise reduction section) **103;** an NR buffer **104;** a scaling section **105;** a filter buffer **106;** a display section **107;** and a control section **108.**

The video decoder **101** decodes a video bit stream and saves the decoded video signals in the decode buffer **102.** The decode buffer **102** is a buffer in which signals decoded by the video decoder **101** are temporarily saved. The temporarily saved video signals are output to the NR section **103** in synchronization with a vertical sync signal (not shown).

The NR section **103** acquires video signals SIG103 saved in the decode buffer 102, receives a horizontal sync signal to reduce noise components of the received video signals line by line in synchronization with the horizontal sync signal, and outputs video signals SIG104 subjected to the noise reduction to the NR buffer **104.** To specify a memory address to which the NR section **103** outputs the video signals SIG104 in the NR buffer **104,** the NR section **103** acquires a memory address SIG109 from the control section **108** and outputs, to the memory address, the video signals subjected to the reduction of noise components so as to save the signals (which will be specifically described later). As already described above, instead of video signals obtained by decoding a video bit stream, the NR section **103** may, of course, receive uncompressed digital video signals from an analog TV set, a DVD player or a network, for example, to reduce noise components of the received video signals or digital video signals.

The NR buffer **104** is a buffer in which video signals whose noise components have been reduced by the NR section **103** are temporarily saved, and this temporarily saved video signals are then output to the scaling section **105.** Specifically, in synchronization with a horizontal sync signal, video data corresponding to one line processed by the NR section **103** are saved in the NR buffer **104** and the data corresponding to one line processed in synchronization with the preceding horizontal sync signal is output to the scaling section **105.**

As shown in FIG. **2,** the NR buffer **104** is formed by five line memories **104a** through **104e.** In each of the line memories **104a** through **104e,** video signals corresponding to one line subjected to noise reduction are saved from the NR section 103. The number of line memories forming the NR buffer **104** is five in this embodiment. However, the present invention is not limited to this, and the number of line memories may be at least three.

The scaling section **105** acquires video signals SIG105 corresponding to a plurality of lines and saved in the NR buffer **104,** receives a horizontal sync signal to perform, in synchronization with this horizontal sync signal, scaling on video signals in the vertical and horizontal directions based on the acquired video signals, and outputs the processed video signals SIG106 to the filter buffer **106.** To specify a line corresponding to video signals SIG 105 which are to be input from the NR buffer **104,** the scaling section **105** acquires a memory address SIG110 of the NR buffer **104** from the control section **108** to take in video signals saved in the acquired memory address.

The filter buffer **106** is a buffer in which video signals subjected to scaling by the scaling section **105** in the vertical and horizontal directions are temporarily saved, and the temporarily saved video signals are output to the display section **107.** Specifically, in the filter buffer **106,** video signals corresponding to one screen and processed by the scaling section **105** are saved, and with the next vertical sync signal, the saved video signals corresponding to one screen are sequentially output to the display section **107** in synchronization with a horizontal sync signal.

With the next vertical sync signal, the display section **107** acquires the video signals temporarily saved in the filter buffer **106** line by line in synchronization with a horizontal sync signal and outputs the acquired signals to a video display device such as a TV set.

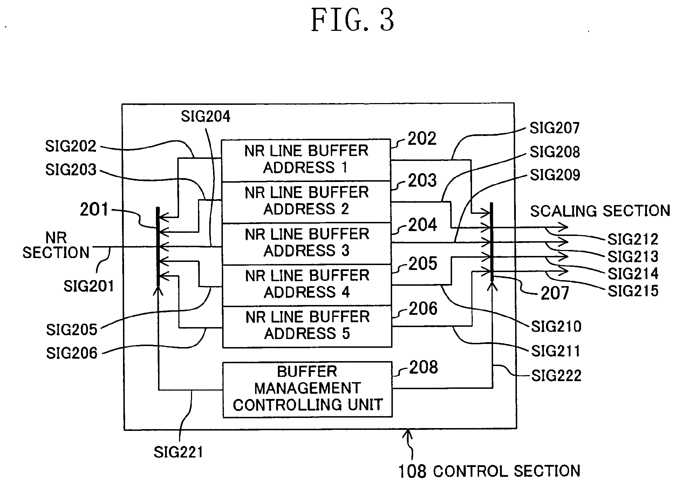

The control section **108** receives a horizontal sync signal and, based on this horizontal sync signal, indicates, to the NR section **103,** an NR buffer line address SIG109 for use in indicating one of the line memories **104a** through **104e** in which video signals corresponding to one line and subjected to reduction of noise components in the NR section **103** are saved. The control section **108** also indicates, to the scaling section **105,** an NR buffer line address SIG110, which is used for indicating a line corresponding to video signals which are to be taken in the scaling section **105** out the five lines and saved in the NR buffer **104.** Hereinafter, an inner configuration of the control section **108** will be described with reference to FIG. 3.

As illustrated in FIG. 3, the control section **108** includes: five NR line buffer address holding units **1** through **5** (**202** through **206**); a buffer management controlling unit **208;** an input switch **201;** and an output switch **207.** The number of the NR line buffer address holding units **1** through **5** is the same as that of the line memories **104a** through **104e** in the NR buffer **104.**

The NR line buffer address holding unit **1202** holds a start address of the first line memory **104a** in the NR buffer **104.** The NR line buffer address holding unit **2203** holds a start address of the second line memory **104b** in the NR buffer **104.** In the same manner, the NR line buffer address holding unit **3204** holds a start address of the third line memory **104c** in the NR buffer **104.** The NR line buffer address holding unit **4205** holds a start address of the fourth line memory **104d.** The NR line buffer address holding unit 5206 holds a start address of the fifth line memory **104e.**

In the configuration of the control section **108** illustrated in FIG. **3,** one NR line buffer address holding unit is associated with one line memory in order to specify one line memory in which video signals corresponding to one line and subjected to noise reduction are to be saved from the NR section **103,** whereas the other four NR line buffer address holding units are associated with the other four line memories in order to perform scaling in the vertical direction by the scaling section **105** and output a video signal corresponding to one pixel using four pixels in the vertical direction. In the case of scaling performed by the scaling section **105** in the vertical direction using only two pixels arranged in the vertical direction, the number of necessary line memories in the NR buffer **104** and the number of NR line buffer address holding units in the control section **108** are both two.

In addition, in the control section **108** illustrated in FIG. **3,** in response to an indication signal SIG221 from the buffer management controlling unit **208,** the input switch **201** selects one start address according to the indication signal SIG221 from start addresses SIG202 through SIG206 respectively held in the five NR line buffer address holding units **1202** through **206,** and indicates and outputs the selected start signal to the NR section **103** as an indication signal SIG201.

In response to an indication signal SIG222 from the buffer management controlling unit **208,** the output switch **207** selects four start addresses according to the indication signal SIG222 from start addresses SIG207 through SIG211 respectively held in the five NR line buffer address holding units **1202** through **206,** and indicates and outputs the selected start addresses to the scaling section **105** as indication signals SIG212 through SIG215.

In addition, upon the input of video signals from the decode buffer **102** to the NR section **103,** the buffer management controlling unit **208** outputs the indication signal SIG221 to the input switch **201** and also outputs the indication signal SIG222 to the output switch **207.** The indication signal SIG221 to the input switch **201** indicates one of the five line memories **104a** through **104e** in which video signals corresponding to one line and subjected to noise reduction by the NR section **103** are to be saved in the NR buffer **104.** The indication signal SIG222 to the output switch **207** indicates selection of the addresses of the other four line memories, i.e., the line memories other than the line memory in the address indicated by the indication signal SIG221 to the input switch **201.** Accordingly, the indication signal SIG221 to the input switch **201** and the indication signal SIG222 to the output switch **207** do not indicate the same address for selection.

The buffer management controlling unit **208** in the control section **108** performs control such that the five line memories **104a** through **104e** in the NR buffer **104** and the five NR line buffer address holding units **202** through **206** in the control section **108** are managed as ring buffers. Specifically, the buffer management controlling unit **208** performs control such that at every output of video signals corresponding to one line from the NR section **103,** the five line memories **104a** through **104e** in the NR buffer **104** sequentially hold the video signals corresponding to one line so that the video signals corresponding to one line are cyclically held among the five line memories. Accordingly, the buffer management controlling unit **208** controls the input switch **201** such that the five NR line buffer address holding units **202** through **206** are sequentially selected. Hereinafter, this control will be specifically described.

For example, with the Mth horizontal sync signal (where M is an arbitrary integer), when the NR line buffer address holding unit **1202** in the Nth line is specified for the NR section **103,** the (N-4)th line is specified for the NR line buffer address holding unit **2203,** the (N-3)th line is specified for the NR line buffer address holding unit **3204,** the (N-2)th line is specified for the NR line buffer address holding unit **4205,** and the (N-1)th line is specified for the NR line buffer address holding unit **5206,** in the scaling section **105.**

Next, with the (M+1)th horizontal sync signal, when the NR line buffer address holding unit **2203** in the (N+1)th line is specified for the NR section **103,** the (N-3)th line is specified for the NR line buffer address holding unit **3204,** the (N-2)th line is specified for the NR line buffer address holding unit **4205,** the (N-1)th line is specified for the NR line buffer address holding unit **5206,** and the Nth line is specified for the NR line buffer address holding unit **1202,** in the scaling section **105.**

Then, with the next (M+2)th horizontal sync signal, when the NR line buffer address holding unit **3204** in the (N+2)th line is specified for the NR section **103,** the (N-2)th line is specified for the NR line buffer address holding unit **4205,** the (N-1)th line is specified for the NR line buffer address holding unit **5206,** the Nth line is specified for the NR line buffer address holding unit **1202,** and the (N+1)th line is specified for the NR line buffer address holding unit **2203,** in the scaling section **105.** In this manner, the NR line buffer address holding units **202** through **206** are managed as ring buffers.

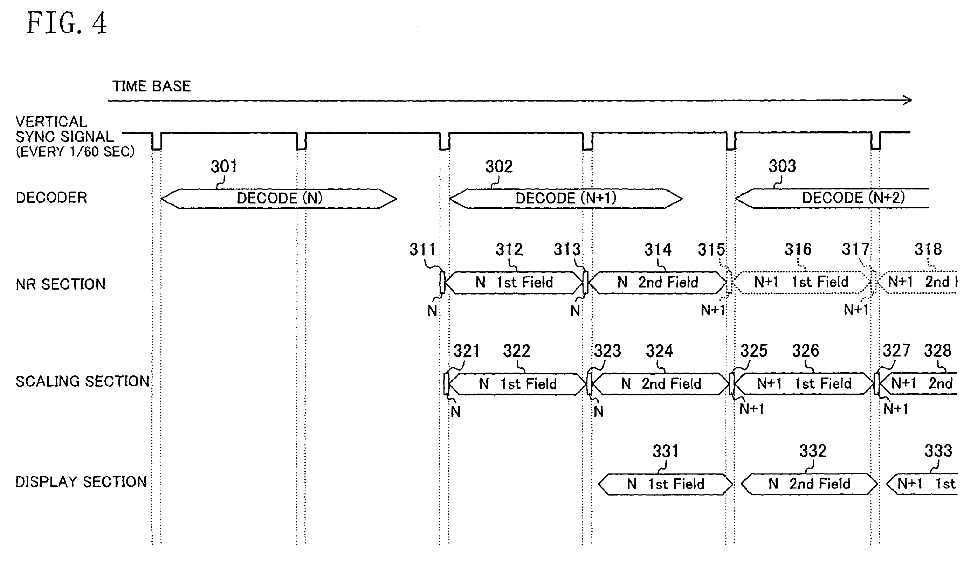

Now, an example of operation of a main portion of the video signal processor illustrated in FIG. **1** will be described. FIG. **4** is a timing chart showing an example of operation of the sections in the video signal processor of this embodiment.

In the timing chart shown in FIG. **4,** video signals to be processed are represented as "N 1st Field", for example. In the following description of processes, signs such as "N" and "N+1" (where N is an integer) represent frame numbers of respective objects to be processed. The "1st Field" and "2nd Field" represent processes for the first field and the second field, respectively. In the timing chart shown in FIG. **4,** a period corresponding to one field, i.e., a vertical sync period, is 1/60 second.

As shown in FIG. **4,** in the video signal processor of this embodiment, the video decoder **101** starts decoding of Nth video bit stream 301 from the first field in synchronization with a vertical sync signal.

Next, in synchronization with a vertical active period of a vertical sync signal two periods after the period in which the decoding of the Nth video bit stream starts, the NR section **103** reduces noise components in first field 312 and second field 314 and outputs video signals subjected to the noise reduction. In synchronization with a vertical active period of the vertical sync signal also used by the NR section **103,** the scaling section **105** sequentially performs scaling on first field 322 and second field 324, which are Nth video signals whose noise components have been reduced, in the vertical and horizontal directions and outputs the processed video signals.

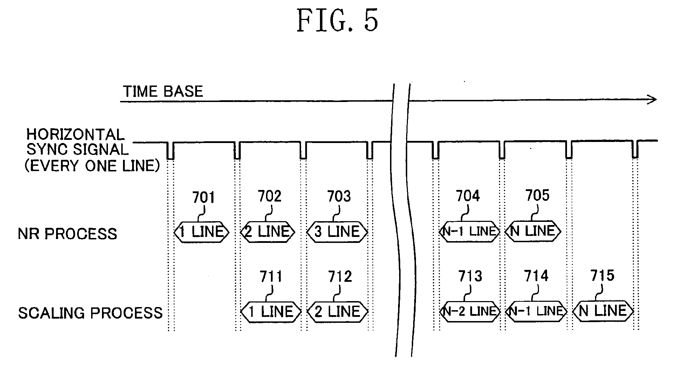

Now, the noise reduction by the NR section **103** and the scaling by the scaling section **105** within one vertical sync signal will be specifically described with reference to FIG. **5.** In FIG. **5,** the NR section **103** sequentially performs noise reduction on video signals line by line, i.e., in the order of the first, second and third lines, in every one cycle of a horizontal sync signal. This noise reduction is completed by the next horizontal sync signal and can be completed early before the next horizontal sync signal in some cases. On the other hand, with the next horizontal sync signal used for the noise reduction performed by the NR section **103** on video signals in an arbitrary Mth line, the scaling section **105** performs scaling on the video signals in the Mth line. That is, the NR section **103** and the scaling section **105** perform pipeline processing.

When noise reduction and scaling are performed on video signals corresponding to one field with every one vertical sync signal in this manner, as shown in FIG. **4,** in synchronization with vertical sync signals subsequent to respective periods in which scaling on Nth fields 322 and 324 in the vertical and horizontal directions starts, the display section **107** sequentially outputs first field 331 and second field 332, which are Nth video signals subjected to scaling in the vertical and horizontal directions.

An NR initialization setting process 311 for the processing on the first field by the NR section **103** starts in synchronization with a vertical blanking period of a vertical sync signal two periods after the period in which the decoding of the Nth video bit stream starts. After this NR initialization setting process, an NR process 312 starts. For the processing on the second field, an NR initialization setting process 313 starts in synchronization with a vertical blanking period of a vertical sync signal three periods after the period in which the decoding of the Nth video bit stream starts. After this NR initialization setting process, an NR process 314 starts.

A scaling initialization setting process 321 for the processing on the first field by the scaling section **105** starts in synchronization with the vertical blanking period of the vertical sync signal also used for initializing the noise reduction 312 performed on the Nth first field by the NR section **103.** After this scaling initialization setting process, a scaling process 322 starts. A scaling initialization setting process 323 for the processing performed on the second field by the scaling section **105** starts in synchronization with the vertical blanking period of the vertical sync signal also used for initializing the noise reduction process 314 performed on the Nth second field by the NR section **103.** After this scaling initialization setting process, a scaling process 324 starts.

In this case, if noise reduction on N+1 1st Field 316, N+1 2nd Field 318 and subsequent fields, for example, are unnecessary and thus the NR section **103** is suspended (this suspension state of noise reduction on these Fields 316 and 318 is represented by broken lines in FIG. **4**), the timings of scaling by the scaling section **105** and outputting by the display section **107** coincide with a vertical sync signal in a case where the NR section **103** operates. Accordingly, it is unnecessary to provide a configuration in which hardware is added so as to temporarily copy video signals from the decode buffer **102** as a preparation for the case of suspension of the NR section **103** or to display video signals with a delay corresponding to one screen on, for example, a TV screen. This ensures normal video display with a video display device such as a TV set.

In addition, in this embodiment, the control section **108** controls the NR section **103** and the scaling section **105** so that noise reduction on video signals corresponding to one line in the NR section **103** and saving of these video signals in the NR buffer **104** are performed in parallel with scaling on video signals by the scaling section **105** without a collision. Accordingly, the NR buffer **104** is allowed to be formed only by five line memories **104a** through **104e.** As a result, the configuration of the NR buffer is made simple and the scale thereof is reduced, as compared to a conventional case where an NR buffer is formed by a field memory.

Operation of the sections included in the video signal processor of this embodiment may be implemented by operating a central processing unit (CPU) using software.

### (EMBODIMENT 2)

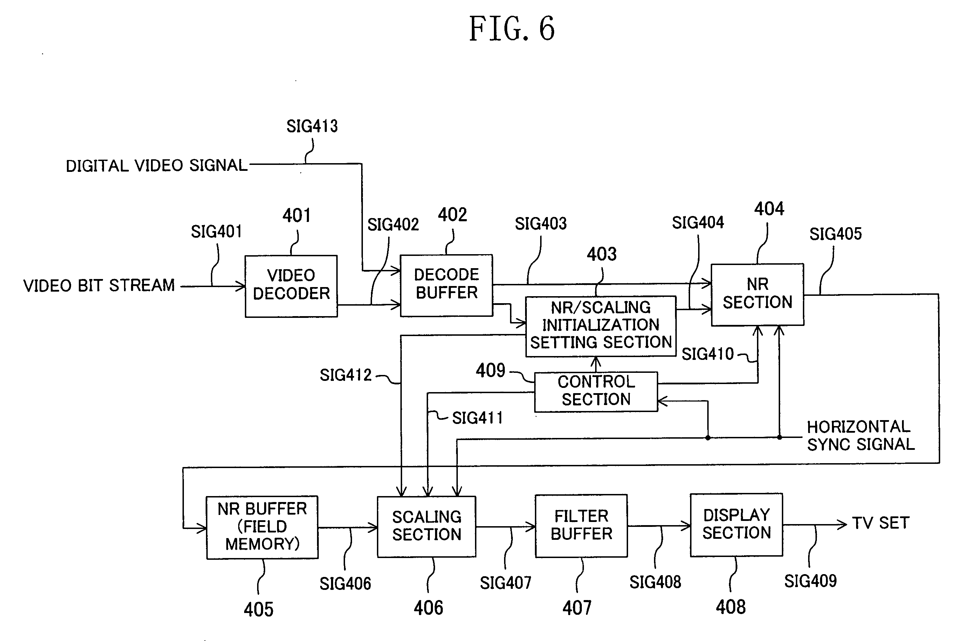

FIG. **6** is a block diagram illustrating a configuration of a video signal processor according to a second embodiment of the present invention.

The video signal processor illustrated in FIG. **6** includes a video decoder **401;** a decode buffer **402;** an NR section **404;** an NR buffer **405;** a scaling section **406;** a filter buffer **407;** a display section **408;** and a control section **409.** Configurations of these components are the same as those already described in the first embodiment with reference to FIG. **1,** and thus detailed description thereof will be omitted.

This embodiment is particularly characterized by an NR/scaling initialization setting section (initialization setting section) **403.** The NR/scaling initialization setting section **403** indicates an initialization setting signal (noise reduction parameter) SIG404 for reducing noise components to the NR section **404** and also indicates an initialization setting signal (filter parameter) SIG412 for scaling in the vertical and horizontal directions to the scaling section **406.**

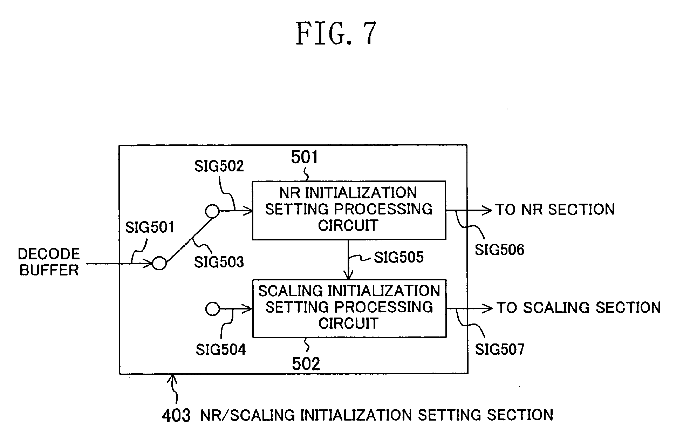

FIG. **7** illustrates an inner configuration of the NR/scaling initialization setting section **403.** As illustrated in FIG. **7,** the NR/scaling initialization setting section **403** includes: an initialization switch **SIG503;** an NR initialization setting processing circuit **501;** and a scaling initialization setting processing circuit **502.**

The initialization switch **SIG503** switches between the NR initialization setting processing circuit **501** and the scaling initialization setting processing circuit **502.** This initialization switch **SIG503** receives decoded video signals saved in the decode buffer **402** illustrated in FIG. **6** (or video signals decoded by the video decoder **401**) and transmits sequence header information SH and picture header information PH included in the header of the received video signals to the NR initialization setting processing circuit **501** and the scaling initialization setting processing circuit **502.** The initialization switch **SIG503** switches to the NR initialization setting processing circuit **501** first, and after completion of an NR initialization setting process, switches to the scaling initialization setting processing circuit **502.**

Based on the received information, the NR initialization setting processing circuit **501** creates a noise reduction parameter for reducing noise components of video signals necessary for the NR section **404,** and indicates this parameter to the NR section **404** as a signal SIG506. Based on the received information, the scaling initialization setting circuit **502** creates a filter parameter for scaling on video signals in the vertical and horizontal directions necessary for the scaling section **406,** and indicates this parameter to the scaling section **406** as a signal SIG507.

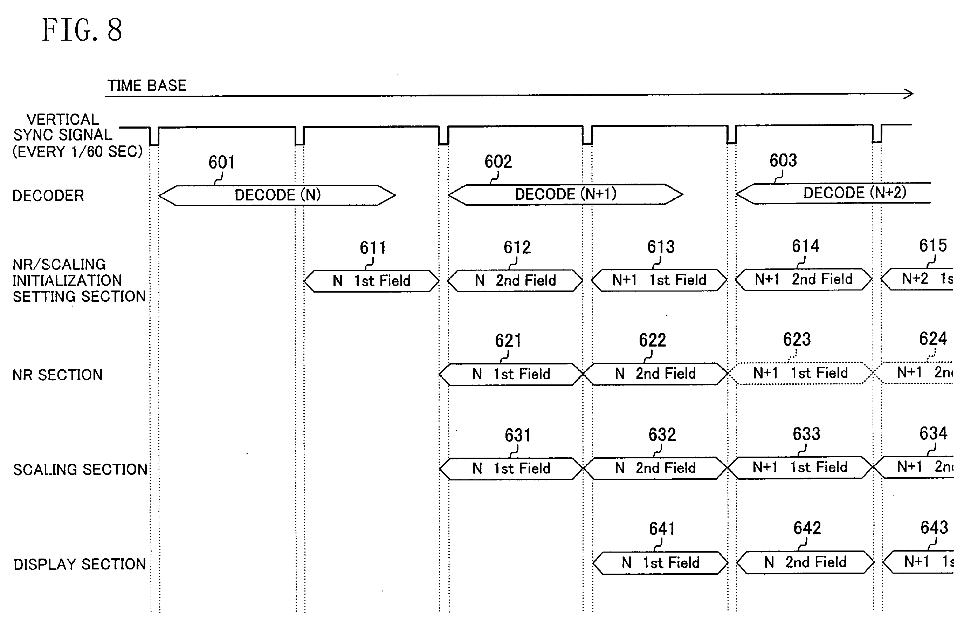

As shown in FIG. **8,** with a vertical sync signal following a start of decoding in the video decoder **401** (i.e., with a vertical sync signal one period before a vertical sync signal used for processing in the NR section **404** and the scaling section **406**), the NR/scaling initialization setting section **403** creates and indicates an initialization signal. The processing in the NR initialization setting processing circuit **501** is completed in the first half of a period of the vertical sync signal (i.e., in 1/120 second) and the processing in the scaling initialization setting processing circuit **502** is performed in the latter half of the period (i.e., in 1/120 second).

Now, an example of operation of a main portion of the video signal processor of this embodiment will be described based on the timing chart shown in FIG. **8.**

In FIG. **8,** the video decoder **401** starts decoding of Nth video bit stream 601 from the first field in synchronization with a vertical sync signal. Then, in synchronization with the next vertical sync signal to the period in which the decoding of the Nth video bit stream starts, the NR/scaling initialization setting section **403** creates a noise reduction parameter for the Nth video bit stream including first field 611 and second field 612 and outputs the parameter to the NR section **404.** Thereafter, a filter parameter for scaling on the Nth video bit stream in the vertical and horizontal directions is created and indicated to the scaling section **406.**

Based on the indicated noise reduction parameter, the NR section **404** reduces noise components of first field 621 and second field 622, in synchronization with the vertical sync signal two periods after the period in which the decoding of the Nth video bit stream starts. Based on the indicated filter parameter, the scaling section **406** performs scaling on first field 631 and second field 632, which are Nth video signals whose noise components have been reduced, in the vertical and horizontal directions, in synchronization with the vertical sync signal also used by the NR section **404.**

Then, in synchronization with the next vertical sync signal to the period in which the Nth scaling in the vertical and horizontal directions starts, the display section **408** outputs first field 641 and second field 642, which are video signals subjected to the Nth scaling in the vertical and horizontal directions.

In this embodiment, the NR/scaling initialization setting processing section **403** performs creation and indication of a noise reduction parameter to the NR section **404** and creation and indication of a filter parameter to the scaling section **406** are performed with the vertical sync signal (i.e., in 1/60 second) one period before the actual noise reduction and scaling. Accordingly, as compared a conventional case in which such creation and indication are performed in a short period, i.e., a vertical blanking period of a vertical sync signal, an operation frequency of the NR/scaling initialization setting processing section **403** can be reduced. In addition, processes in the NR section **404** and the scaling section **406** are completed in a period (i.e., 1/60 second) from a vertical sync signal to the next vertical sync signal, so that operation frequencies of the NR section **404** and the scaling section **406** can also be reduced, and the circuit scales thereof are reduced accordingly.

In this embodiment, operation of the NR/scaling initialization setting section **403** may also be implemented by operating a central processing unit (CPU) using software.

In this embodiment, a noise reduction parameter is created first, and a filter parameter is then created. However, conversely, a filter parameter may be created first before a noise reduction parameter is created.

### (EMBODIMENT 3)

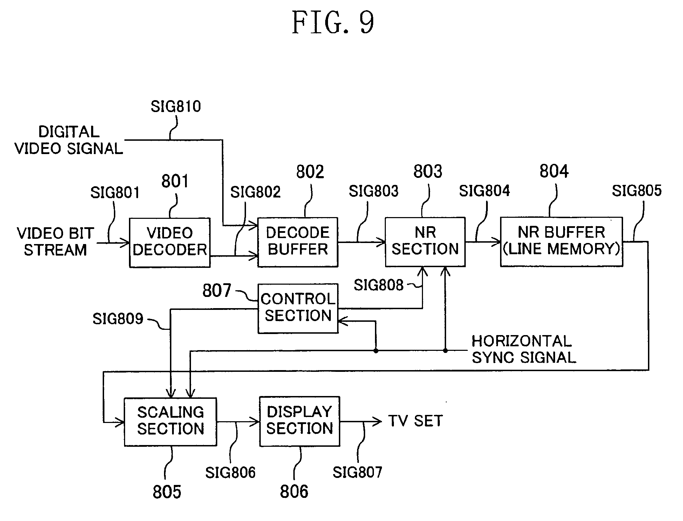

Now, a video signal processor according to a third embodiment of the present invention will be described with reference to FIG. **9.**

The video signal processor illustrated in FIG. **9** includes: a video decoder **801;** a decode buffer **802;** an NR section **803;** an NR buffer **804;** a scaling section **805;** a display section **806;** and a control section **807.** Configurations of these components are the same as those already described in the first embodiment with reference to FIG. **1,** and thus detailed description thereof will be omitted.

This embodiment is characterized in that the filter buffers **106** and **407** illustrated in FIGS. **1** and **6** are omitted.

Specifically, in this embodiment, in one vertical sync signal shown in FIG. **11,** the NR section **803** sequentially performs noise reduction on video signals line by line from the first line to the Nth line in synchronization with a horizontal sync signal and the scaling section **805** sequentially performs scaling on video signals line by line from the first line to the Nth line with a delay corresponding to one horizontal sync signal as compared to the noise reduction by the NR section **803.** These processes are the same as those in the first embodiment. However, the display section **806** outputs video signals associated with each line processed by the scaling section **805** to a video display device such as a TV set using the horizontal sync signal used for the scaling. Accordingly, the scaling section **805** and the display section **806** operate in synchronization with each other and perform parallel processing with (the same cycle of) the same horizontal sync signal.

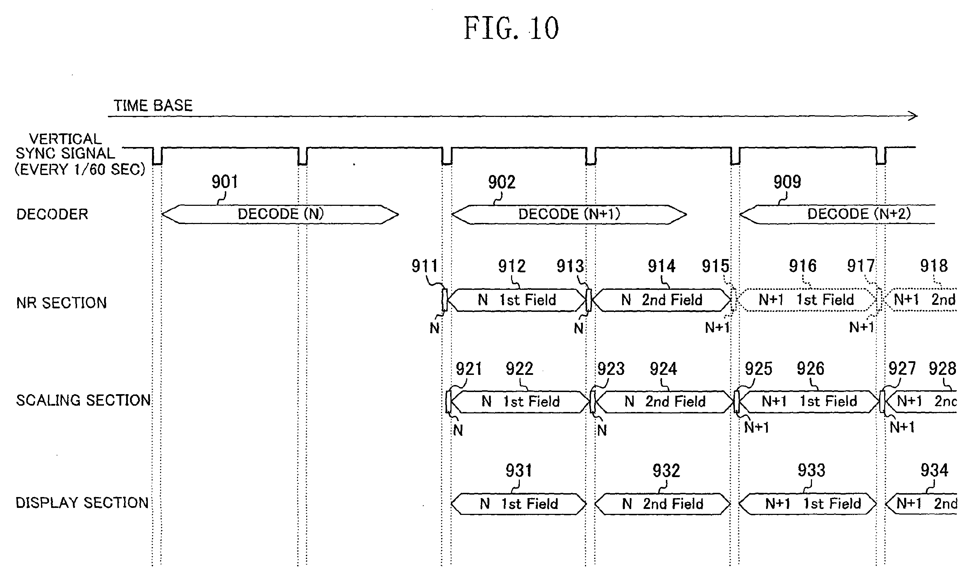

Accordingly, in synchronization with a line of video signals processed by the scaling section **805** as described above, the display section **806** outputs the video signals corresponding to the line to a video display device such as a TV set. As a result, as shown in the timing chart of FIG. **10,** the display section **806** operates in synchronization with the scaling section **805.** More specifically, when the scaling section **805** sequentially performs scaling on Nth, (N+1)th ... fields 922, 924, 926 and 928 in this order with respective vertical sync signals, the display section **806** sequentially outputs Nth, (N+1)th ... fields 931 through 934 in this order in the respective periods of the associated vertical sync signals also used for the above fields.

In this manner, at the same timing of scaling performed on video signals line by line by the scaling section **805** in synchronization with a horizontal sync signal, the display section **806** sequentially outputs video signals line by line to a device such as a TV set in synchronization with the horizontal sync signal. This allows video display device such as a TV set to provide normal display.

Accordingly, in this embodiment, it is unnecessary to provide a filter buffer (i.e., a field memory) (e.g., the filter buffer **11A6** described in the conventional example shown in FIG. **12**) for storing video signals subjected to scaling from the scaling section **805.** In addition, in this embodiment, as shown in FIG. **10,** the period between the start of decoding of video signals by the video decoder **801** and processing on the video signals by the display section **806** corresponds to two vertical sync signals, whereas in the conventional example shown in FIG. **15,** this periods corresponds to four vertical sync signals as shown in FIG. **15.** Accordingly, in this embodiment, video display is performed earlier than that in the conventional example by a period corresponding to two vertical sync signals. As a result, for audio signals which normally accompany video signals, after decoding of the audio signals, it is sufficient to store a part of the audio signals corresponding to only two vertical sync signals. This enables the capacity of a buffer for storing audio signals to be reduced in half.

### INDUSTRIAL APPLICABILITY

As described above, according to the present invention, an NR buffer for storing video signals subjected to noise reduction is formed by a plurality of line memories and processing in a noise reduction section and processing in a scaling section are performed in parallel. Accordingly, the present invention is useful for video signal processors for use in noise reduction for, for example, digital TV sets or DVD players and processing on TV output signals.

## Claims

1. A video signal processor, comprising:
a noise reduction section for reducing noise components of video signals;
an NR buffer for storing video signals whose noise components have been reduced by the noise reduction section, the NR buffer being formed by a plurality of line memories;
a magnification/reduction section for performing magnification or reduction on the video signals from the NR buffer in vertical and horizontal directions; and
a control section for controlling the noise reduction section and the magnification/reduction section,
wherein the control section controls the noise reduction section and the magnification/reduction section such that video signals corresponding to one line out of the video signals subjected to the noise reduction are output from the noise reduction section to one of the line memories of the NR buffer and the other video signals corresponding to a plurality of lines and stored in the line memories of the NR buffer except for the line memory to which the video signals corresponding to one line have been input from the noise reduction section are input from the NR buffer to the magnification/reduction section.

2. The video signal processor of claim 1, wherein
the control section includes:
NR line buffer address holding units in each of which an address of an associated one of the line memories of the NR buffer is saved;
an input switch for selecting one of the addresses of the line memories saved in the NR line buffer address holding units and indicating the selected address to the noise reduction section;
an output switch for selecting one of the addresses of the line memories saved in the NR line buffer address holding units and indicating the selected address to the magnification/reduction section; and
a buffer management controlling unit for controlling the input switch such that the address of one of the line memories to which video signals subjected to noise reduction by the NR buffer and corresponding to one line have been input is selected from the NR line buffer address holding units and for controlling the output switch such that the addresses of the line memories except for the line memory whose address has been selected by the input switch are selected from the NR line buffer address holding units.

3. The video signal processor of claim 2, wherein the number of the NR line buffer address holding units is equal to the number of the line memories included in the NR buffer,
each of the NR line buffer address holding units holds an address value of an associated one of the line memories of the NR buffer, and
the buffer management controlling unit controls the input switch so that the input switch sequentially selects the NR line buffer address holding units in such a manner that video signals output from the noise reduction section and corresponding to one line are cyclically held in the line memories of the NR buffer line by line.

4. The video signal processor of claim 1, wherein the noise reduction section reduces noise components of video signals corresponding to one line in synchronization with a horizontal sync signal, and
in synchronization with the horizontal sync signal, the magnification/reduction section performs magnification or reduction on the video signals corresponding to one line in vertical and horizontal directions with a horizontal sync signal following the horizontal sync signal used for the reduction of the noise components of the video signals corresponding to one line by the noise reduction section.

5. The video signal processor of claim 1, further comprising:
an initialization setting section for indicating an initial value for reducing the noise components of the video signals to the noise reduction section and for indicating an initial value for performing magnification or reduction on the video signals in the vertical and horizontal directions to the magnification/reduction section.

6. The video signal processor of claim 5, wherein the initialization setting section includes:
a noise-reduction initialization setting processing circuit for indicating a noise reduction parameter for reducing the noise component to the noise reduction section; and
a magnification/reduction initialization setting processing circuit for indicating, to the magnification/reduction section, a filter parameter for magnification on video signals with a specified magnification factor.

7. The video signal processor of claim 5, wherein the magnification/reduction initialization setting processing circuit starts indication after indication by the noise-reduction initialization setting processing circuit has been completed, and, with a vertical sync signal one period before a start of noise reduction performed by the noise reduction section on video signals corresponding to a given line in synchronization with a vertical sync signal or 1/60 second before the start, the magnification/reduction initialization setting processing circuit also starts indication of an initial value for magnification or reduction on video signals using video signals corresponding to a plurality of lines including the given line.

8. The video signal processor of claim 5, wherein the noise-reduction initialization setting processing circuit starts indication after indication by the magnification/reduction initialization setting processing circuit has been completed, and with a vertical sync signal one period before a start of noise reduction performed by the noise reduction section on video signals corresponding to a given line in synchronization with a vertical sync signal or 1/60 second before the start, the noise-reduction initialization setting processing circuit starts indication of an initial value for reducing noise components of video signals corresponding to the given line.

9. The video signal processor of claim 1, further comprising a display section for outputting video signals subjected to magnification or reduction by the magnification/reduction section in synchronization with the video signals, the display section being provided at a stage subsequent to the magnification/reduction section.

10. The video signal processor of claim 9, wherein the display section outputs, to a video display device, video signals corresponding to one line with a given horizontal sync signal also used for magnification or reduction performed on the video signals corresponding to the line by the magnification/reduction section.

11. The video signal processor of one of claims 1, 5 and 9, wherein the noise reduction section suspends reduction of a noise component for 1/60 second or a period which is N or more times longer than 1/60 second (where N is an integer of two or more).

12. The video signal processor of one of claims 1, 5 and 9, wherein the noise reduction section performs no reduction of noise components of video signals to be subjected to magnification or reduction by the magnification/reduction section and corresponding to the lines.

13. The video signal processor of one of claims 1, 5 and 9, further comprising a decode buffer for holding video signals obtained by decoding a coded video bit stream or uncompressed digital video signals, and
the noise reduction section reduces noise components of the video signals obtained by decoding the video bit stream or the uncompressed digital video signals held in the decode buffer.

## Amended claims

### Amended claims under Art. 19.1 PCT

1. (Amended) A video signal processor, comprising:
a noise reduction section for reducing noise components of video signals;
an NR buffer for storing video signals whose noise components have been reduced by the noise reduction section, the NR buffer being formed by a plurality of line memories;
a magnification/reduction section for performing magnification or reduction on the video signals from the NR buffer in vertical and horizontal directions; and
a control section for controlling the noise reduction section and the magnification/reduction section,
wherein the control section controls the noise reduction section and the magnification/reduction section such that video signals corresponding to one line out of the video signals subjected to the noise reduction are output from the noise reduction section to one of the line memories of the NR buffer and the other video signals corresponding to a plurality of lines and stored in the line memories of the NR buffer except for the line memory to which the video signals corresponding to one line have been input from the noise reduction section are input from the NR buffer to the magnification/reduction section,
the noise reduction section reduces noise components of video signals corresponding to one line in synchronization with a horizontal sync signal, and
in synchronization with the horizontal sync signal, the magnification/reduction section performs magnification or reduction on the video signals corresponding to one line in vertical and horizontal directions with a horizontal sync signal following the horizontal sync signal used for the reduction of the noise components of the video signals corresponding to one line by the noise reduction section.

2. (Canceled)

3. (Canceled)

4. (Canceled)

5. The video signal processor of claim 1, further comprising:
an initialization setting section for indicating an initial value for reducing the noise components of the video signals to the noise reduction section and for indicating an initial value for performing magnification or reduction on the video signals in the vertical and horizontal directions to the magnification/reduction section.

6. The video signal processor of claim 5, wherein the initialization setting section includes:
a noise-reduction initialization setting processing circuit for indicating a noise reduction parameter for reducing the noise component to the noise reduction section; and
a magnification/reduction initialization setting processing circuit for indicating, to the magnification/reduction section, a filter parameter for magnification on video signals with a specified magnification factor.

7. The video signal processor of claim 5, wherein the magnification/reduction initialization setting processing circuit starts indication after indication by the noise-reduction initialization setting processing circuit has been completed, and, with a vertical sync signal one period before a start of noise reduction performed by the noise reduction section on video signals corresponding to a given line in synchronization with a vertical sync signal or 1/60 second before the start, the magnification/reduction initialization setting processing circuit also starts indication of an initial value for magnification or reduction on video signals using video signals corresponding to a plurality of lines including the given line.

8. The video signal processor of claim 5, wherein the noise-reduction initialization setting processing circuit starts indication after indication by the magnification/reduction initialization setting processing circuit has been completed, and with a vertical sync signal one period before a start of noise reduction performed by the noise reduction section on video signals corresponding to a given line in synchronization with a vertical sync signal or 1/60 second before the start, the noise-reduction initialization setting processing circuit starts indication of an initial value for reducing noise components of video signals corresponding to the given line.

9. The video signal processor of claim 1, further comprising a display section for outputting video signals subjected to magnification or reduction by the magnification/reduction section in synchronization with the video signals, the display section being provided at a stage subsequent to the magnification/reduction section.

10. The video signal processor of claim 9, wherein the display section outputs, to a video display device, video signals corresponding to one line with a given horizontal sync signal also used for magnification or reduction performed on the video signals corresponding to the line by the magnification/reduction section.

11. (Amended) The video signal processor of claim 1, wherein the noise reduction section suspends reduction of a noise component for 1/60 second or a period which is N or more times longer than 1/60 second (where N is an integer of two or more).

12. (Amended) The video signal processor of claim 1, wherein the noise reduction section performs no reduction of noise components of video signals to be subjected to magnification or reduction by the magnification/reduction section and corresponding to the lines.

13. (Amended) The video signal processor of claim 1, further comprising a decode buffer for holding video signals obtained by decoding a coded video bit stream or uncompressed digital video signals,
wherein the noise reduction section reduces noise components of the video signals obtained by decoding the video bit stream or the uncompressed digital video signals held in the decode buffer.
